# EUROPÄISCHE PATENTSCHRIFT

(11) **EP 0 519 245 B1**
(45) Veröffentlichungstag und Bekanntmachung des Hinweises auf die Patenterteilung: **13.12.1995**
(21) Anmeldenummer: 92109041.1
(22) Anmeldetag: 29.05.1992
(51) Int. Cl.: G01K 13/02, H01M 2/10

(54) **Temperaturmess- und Anzeigevorrichtung**
Temperature measuring and indicating device
Dispositif pour mesurer et indiquer la température

(30) Priorität: 19.06.1991 DE 4120348
(43) Veröffentlichungstag der Anmeldung: 23.12.1992
(73) Patentinhaber: FRIEDRICH GROHE AKTIENGESELLSCHAFT, D-58675 Hemer (DE)
(72) Erfinder: Pawelzik, Manfred, W-4770 Soest (DE); Brandebusemeyer, Heinz, W-5750 Menden (DE)

(56) Entgegenhaltungen:
- DE-A- 3 330 585
- DE-A- 3 513 549

## Beschreibung

Die Erfindung bezieht sich auf eine Vorrichtung zum Messen und Anzeigen der Wassertemperatur in Verbindung mit Sanitärarmaturen, wobei in einem Gehäuse eine elektrische Meß- und Anzeigevorrichtung sowie eine Batterie als elektrische Energiequelle für den Betrieb der Vorrichtung angeordnet sind, während von einem Meßfühler die Temperatur des Wassers erfaßt und der Meßvorrichtung zugeleitet wird.
Eine derartige Einrichtung ist aus der Druckschrift DE 33 30 585 A1 bekannt, wobei jedoch das Meßwerk und die Anzeigeeinrichtung getrennt angeordnet sind, wodurch die Montage der Vorrichtung erschwert ist. Außerdem ist bei einer Unterputz-Anordnung die Meßeinrichtung und die Anzeigeeinrichtung in getrennten Gehäusen angeordnet, so daß verschiedene Meß- und Anzeigevorrichtungen bevorratet werden müssen.
Ferner ist es noch bekannt (US 3 960 016), die Anzeigevorrichtung einer Temperaturmeßeinrichtung in der Abdeckrosette für eine Unterputz-Armatur anzuordnen.

Der Erfindung liegt die Aufgabe zugrunde, die im Oberbegriff des Anspruchs 1 angegebene Meß- und Anzeigevorrichtung zu verbessern und insbesondere so auszubilden, daß sie sowohl bei Aufputz- als auch bei Unterputzleitungen einsetzbar ist.

Diese Aufgabe wird erfindungsgemäß dadurch gelöst, daß die Meß- und Anzeigevorrichtung als Baueinheit mit wenigstens zwei Anschlußkontaktpaaren für die separate Batterie ausgebildet ist, wobei wenigstens ein Anschlußkontaktpaar an einer vorstehenden, entfernbaren Zunge und das andere Anschlußkontaktpaar in der Nähe oder unmittelbar in oder an der Baueinheit angeordnet ist, so daß die Batterie in Abhängigkeit vom Einsatzort der Meß- und Anzeigevorrichtung an der Zunge oder an der Baueinheit anschließbar ist.
Weitere Ausgestaltungen der Erfindung sind in den Ansprüchen 2 bis 10 angegeben.

Mit der vorgeschlagenen Einrichtung wird erreicht, daß die als Elektronikbauteil ausgebildete Baueinheit der Meß- und Anzeigevorrichtung sowohl bei Aufputzleitungen als auch bei Unterputzleitungen eingesetzt werden kann. Bei Unterputzleitungen kann vorteilhaft die Meß- und Anzeigevorrichtung in der Abdeckrosette der Unterputz-Armatur integriert werden. Mit der erfindungsgemäßen Ausbildung kann daher die Herstellungsstückzahl der Baueinheit vergrößert werden, wodurch eine Senkung der Herstellungskosten ermöglicht werden kann. Auch sind nicht mehr verschiedene Meß- und Anzeigevorrichtungen zu bevorraten, was eine vereinfachte Lagerhaltung ermöglicht.
Schließlich kann auch die Montage der Baueinheit in den Gehäusen vereinfacht werden, wobei eine relativ freie Zugänglichkeit zum Auswechseln der Batterien ermöglicht ist.

Durch die Anordnung des Meßfühlers in einer metallenen Aufnahmebohrung des Wasserkanals ist insbesondere bei der Unterputzausführung eine einfache Installation an der Baustelle ermöglicht. Durch die am Temperaturfühler ausgebildeten Spreizfedern wird ein inniger Kontakt zu der metallenen Bohrungswandung hergestellt, so daß einerseits eine im wesentlichen verlustfreie Temperaturerfassung und andererseits ein verhältnismäßig problemloses Auswechseln des Temperaturfühlers ermöglicht wird.

Ein Ausführungsbeispiel der Erfindung ist in der Zeichnung dargestellt und wird im folgenden näher beschrieben. Es zeigt
- Figur 1: die Meß- und Anzeigevorrichtung in Seitenansicht;
- Figur 2: die Meß- und Anzeigevorrichtung in Draufsicht;
- Figur 3: die in Figur 1 und 2 gezeigte Vorrichtung in einem Gehäuse einer Aufputzleitung in Seitenansicht;
- Figur 4: die Vorrichtung gemäß Figur 3 im Längsschnitt;
- Figur 5: die Vorrichtung gemäß Figur 4 in der Schnittebene V;
- Figur 6: die Vorrichtung gemäß Figur 1 und 2 in einer Unterputz-Abdeckrosette in Vorderansicht;
- Figur 7: die Vorrichtung gemäß Figur 6 in der Schnittebene VII;
- Figur 8: die in Figur 6 gezeigte Vorrichtung, montiert in einer Gebäudewand im Längsschnitt.

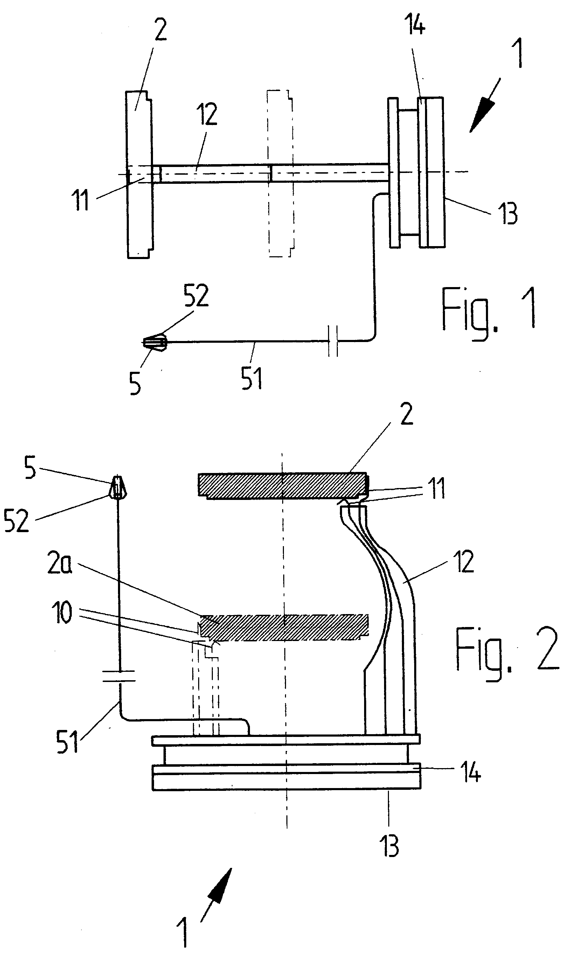

Die in den Figuren 1 und 2 gezeigte Temperaturmeß- und Anzeigevorrichtung besteht aus einer elektronischen Baueinheit 1, die von einer Temperaturanzeigetafel 13 in Flüssigkristallausbildung, einem Meßwerk 14, einer abbrechbaren Zunge 12, Anschlußkontaktpaaren 10,11 sowie einem Temperaturfühler 5 mit einer Leitung 51 zum Meßwerk 14 gebildet ist. Zur elektrischen Energieversorgung der Baueinheit 1 ist eine Batterie 2 vorgesehen. Da die Batterie 2 sich nach einer bestimmten Gebrauchsdauer erschöpft, muß sie auswechselbar in einem später näher erläuterten Gehäuse 3,41 angeordnet werden. Bei einer Aufputzanordnung mit eng am Wasserkanal angeordneter Baueinheit 1 ist daher die Batterie 2 an der der Anzeigetafel 13 gegenüberliegenden Rückseite im Gehäuse 3 anzuordnen, während bei einer Unterputzleitung die Batterie 2 in der Nähe oder unmittelbar in oder an der Baueinheit 1 im Gehäuse 41 angeordnet werden kann. Soll die Baueinheit 1 in einer Unterputzleitung im Gehäuse 41 angeordnet werden, so ist die Zunge 12 im Bereich des Meßwerks 14 abzubrechen, so daß nunmehr die Batterie 2 mit den Kontakten 10 mit dem Meßwerk 14 in Verbindung gebracht werden kann, wie es insbesondere aus Figur 2 in der gestrichelten Ausführung der Batterie 2a zu entnehmen ist. Der Temperaturfühler 5 ist hierbei mit Hilfe der Leitung 51 außerhalb des Gehäuses 41 positioniert. Anstatt der geringfügig vom Meßwerk 14 vorstehenden Kontakte 10 können diese auch unmittelbar am oder in dem Meßwerk 14 angeordnet werden, so daß die Batterie 2 dann am Meßwerk 14 integriert ist.

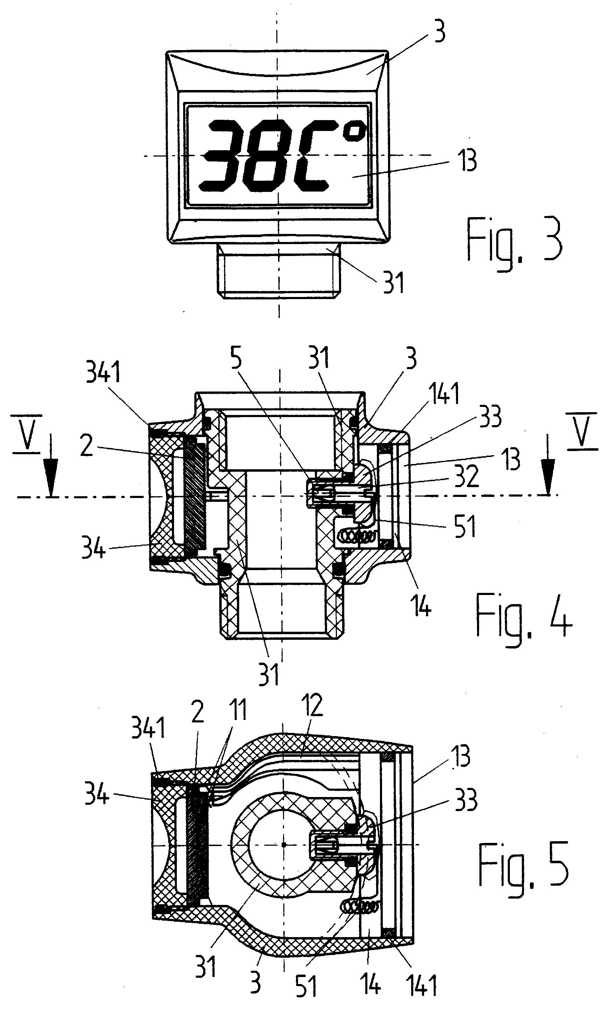

Bei dem in den Figuren 3 bis 5 dargestellten Ausführungsbeispiel einer Aufputzversion ist die Baueinheit 1 in einem ringförmigen Gehäuse 3 angeordnet, das von dem rohrförmigen Wasserkanal 31 durchdrungen ist. Sowohl das Gehäuse 3 als auch der Wasserkanal 31 sind aus Kunststoff hergestellt, wobei der Wasserkanal 31 vorzugsweise ein Teilstück einer Brauseleitung darstellt. Das Gehäuse 3 ist dabei koaxial auf den Wasserkanal 31 mit Dichtringen 341 gedichtet angeordnet und drehfest in der Stecklage gesichert. Am vorderen Bereich der Seitenwandung des Gehäuses 3 ist eine im Querschnitt rechteckige Öffnung ausgebildet, in der die entsprechend dimensionierte Anzeigetafel 13 mit dem Meßwerk 14 mit einem Dichtring 141 gedichtet angeordnet ist. Diametral der Anzeigetafel 13 gegenüberliegend ist in dem Gehäuse 3 ein mit einem Gewinde befestigter und mit einem Dichtring 341 gedichteter Deckel 34 vorgesehen. An dem Deckel 34 ist die Batterie 2 angelagert, wie es insbesondere aus Figur 4 und 5 zu entnehmen ist. Die Zunge 12 ist bogenförmig um den Wasserkanal 31 herumgeführt und liegt hierbei mit ihren Kontakten 11 an den entsprechenden Kontakten der Batterie 2 an, wie es insbesondere aus Figur 5 zu entnehmen ist. Durch ein Herausschrauben des Deckels 34 kann somit die Batterie 2 ausgewechselt werden.
In der Wandung des Wasserkanals 31 ist eine aus gut wärmeleitendem Metall hergestellte Gewindeschraube 33 angeordnet, die mit dem durchströmenden Wasser unmittelbar in Kontakt steht. Koaxial in der Gewindeschraube 33 ist eine Bohrung 32 sackförmig ausgebildet für die Aufnahme des Temperaturfühlers 5. Der Temperaturfühler 5 5 weist dabei, wie es insbesondere aus Figur 1 und 2 zu entnehmen ist, Spreizfedern 52 auf, die einen guten Kontakt zur Innenwandung der Bohrung 32 herstellen und somit eine im wesentlichen verlustfreie Temperaturübertragung ermöglichen. Durch die Spreizfedern 52 wird darüber hinaus der Temperaturfühler 5 durch Reibschluß in seiner Position an der Gewindeschraube 33 gehalten. Die von dem durchströmenden Wasser erfühlte Temperatur wird somit vom Temperaturfühler 5 in entsprechende elektrische Signale umgewandelt und über die Leitung 51 dem Meßwerk 14 zugeleitet, so daß danach an der Anzeigetafel 13 die digital angegebene Temperatur abgelesen werden kann.

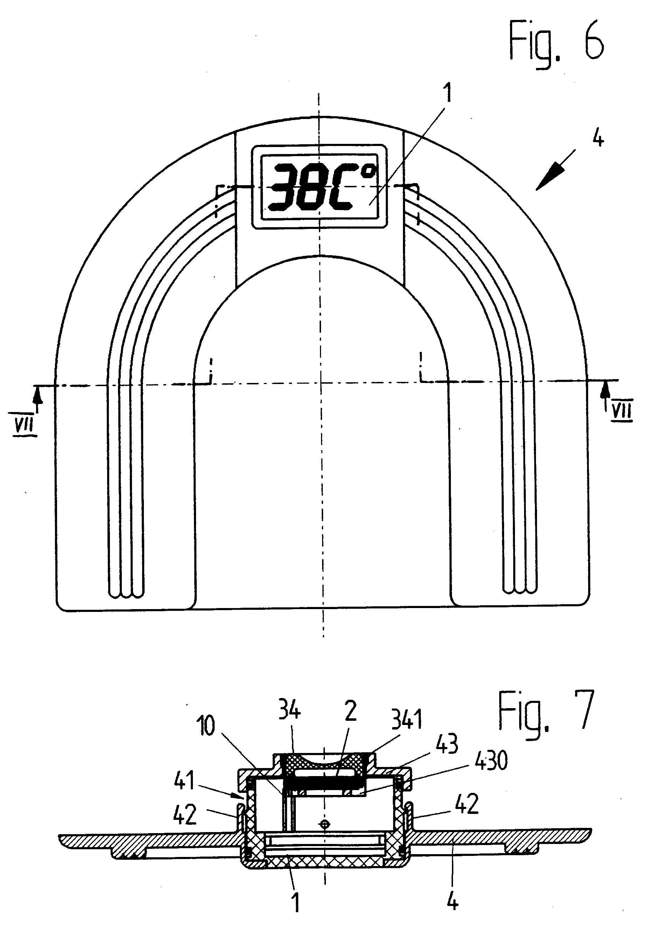

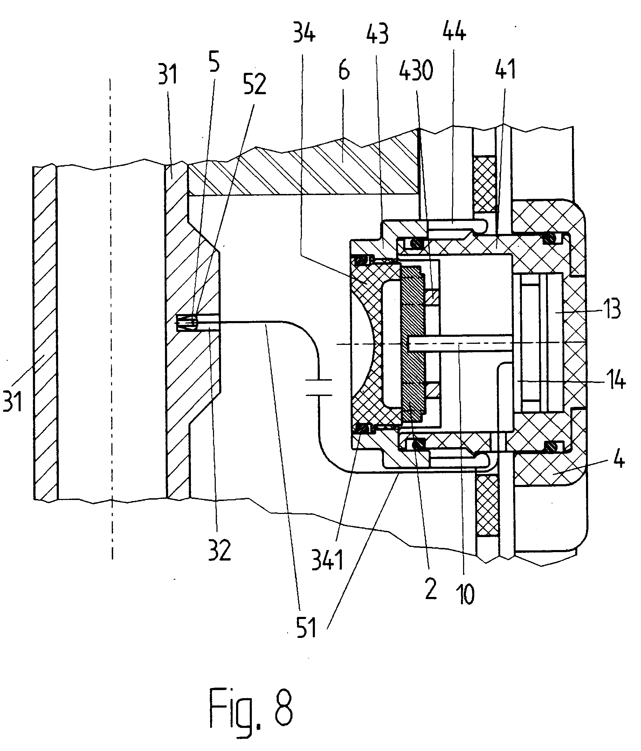

In den Figuren 6 bis 8 ist die Baueinheit 1 in einer Abdeckrosette 4 eines Unterputz-Ventils - in der Zeichnung nicht weiter dargestellt - angeordnet. Der Wasserkanal 31 ist hierbei in einer Gebäudewand 6 angeordnet, wobei der Wasserkanal ebenfalls eine Bohrung 32 zur Aufnahme des Temperaturfühlers 5 aufweist. Die Baueinheit 1 ohne Temperaturfühler 5 ist dabei in einem Gehäuse 41 angeordnet, welches mittels Schnappzungen 42 in der Steckposition in der Abdeckrosette 4 mit einem Dichtring 341 gedichtet gehaltert wird, wie es insbesondere aus Figur 7 zu entnehmen ist. Auf der Rückseite ist das Gehäuse 41 mit einer Kappe 43 und einem Dichtring 341 verschlossen. Die Kappe 43 wird dabei mit Rastzungen 44, wie es aus Figur 8 der Zeichnung zu entnehmen ist, am Gehäuse 41 gehaltert. Die Rastzungen 44 sind um 90° gedreht zu den Schnappzungen 42 angeordnet.
In der Kappe 43 ist der Deckel 34 angeordnet, so daß die Batterie 2, die von einem Korb 430 gehalten ist, auswechselbar ist, wenn die Abdeckrosette 4 von der Gebäudewand abgezogen wird. Mit der Batterie 2 ist über die Kontakte 10 wiederum das Meßwerk 14 verbunden, so daß die in der Bohrung 32 von dem Temperaturfühler 5 ermittelte Temperatur des durchströmenden Wassers in dem Wasserkanal 31, umgewandelt in entsprechende elektrische Signale, über die Leitung 51 durch das Gehäuse 41 dem Meßwerk 14 zugeleitet wird, worauf dann die gemessene Wassertemperatur digital an der Anzeigetafel 13 ablesbar ist.

## Patentansprüche

1. Vorrichtung zum Messen und Anzeigen der Wassertemperatur in Verbindung mit Sanitärarmaturen, wobei in einem Gehäuse eine elektrische Meß- und Anzeigevorrichtung sowie eine Batterie als elektrische Energiequelle für den Betrieb der Vorrichtung angeordnet sind, während von einem Meßfühler die Temperatur des Wassers erfaßt und der Meßvorrichtung zugeleitet wird, dadurch gekennzeichnet, daß die Meß- und Anzeigevorrichtung als Baueinheit (1) mit wenigstens zwei Anschlußkontaktpaaren (10,11) für die separate Batterie (2) ausgebildet ist, wobei wenigstens ein Anschlußkontaktpaar (11) an einer vorstehenden, entfernbaren Zunge (12) und das andere Anschlußkontaktpaar (10) in der Nähe oder unmittelbar in oder an der Baueinheit (1) angeordnet ist, so daß die Batterie (2) in Abhängigkeit vom Einsatzort der Meß- und Anzeigevorrichtung an der Zunge (12) oder an der Baueinheit (1) anschließbar ist.

2. Vorrichtung nach Anspruch 1, dadurch gekennzeichnet, daß die Zunge (12) von der Baueinheit (1) abbrechbar ausgebildet ist.

3. Vorrichtung nach einem der Ansprüche 1 oder 2, dadurch gekennzeichnet, daß der Temperaturfühler (5) in die Wandung des Wasserkanals (31) einsetzbar und über eine Leitung (51) mit der Baueinheit (1) verbunden ist.

4. Vorrichtung nach einem der Ansprüche 1 bis 3, dadurch gekennzeichnet, daß die Baueinheit (1) seitlich an der Wandung an einem durch das Gehäuse (3) geführten Wasserkanal (3) angeordnet ist, wobei die Zunge (12) um die Wandung des Wasserkanals (31) herumgeführt ist, so daß die Batterie (2) etwa auf der der Meß- und Anzeigevorrichtung gegenüberliegenden Seite am Wasserkanal (31) anord- und verbindbar mit der Vorrichtung ist.

5. Vorrichtung nach einem der Ansprüche 1 bis 3, dadurch gekennzeichnet, daß die Baueinheit (1) mit entfernter Zunge (12) und der Batterie (2) in einem an einer Abdeckrosette (4) vorgesehenen Gehäuse (41) angeordnet ist, wobei der Temperaturfühler (5) außerhalb des Gehäuses (41) vorgesehen und über eine Leitung (51) mit dem Meßwerk (14) verbunden ist.

6. Vorrichtung nach Anspruch 5, dadurch gekennzeichnet, daß das Gehäuse (41) an der Abdeckrosette (4) vorzugsweise mit Schnappzungen (42) befestigbar ausgebildet ist.

7. Vorrichtung nach einem der Ansprüche 1 bis 6, dadurch gekennzeichnet, daß ein elektrischer Temperaturfühler (5) vorgesehen ist.

8. Vorrichtung nach einem der Ansprüche 1 bis 7, dadurch gekennzeichnet, daß der Temperaturfühler (5) mit einer oder mehreren Spreizfedern (52) in einer Bohrung (32) in der Seitenwandung des Wasserkanals (31) angeordnet ist.

9. Vorrichtung nach Anspruch 8, dadurch gekennzeichnet, daß die Bohrung (32) in einer gut wärmeleitenden Gewindeschraube (33) aus Metall ausgebildet ist, die in der Wandung des Wasserkanals (31) eindrehbar ist.

10. Vorrichtung nach einem der Ansprüche 1 bis 9, dadurch gekennzeichnet, daß das Gehäuse (41) an der Rückseite von einer Kappe (43) verschlossen ist, die in der Schließposition von Rastzungen (44) gehalten ist.

## Claims

1. Device for measuring and displaying the water temperature in conjunction with sanitary fittings, there being arranged in a housing an electrical measuring and display device, as well as a battery as the electric power source for the operation of the device, while the temperature of the water is detected by a measuring sensor and fed to the measuring device, characterised in that the measuring and display device is in the form of a constructional unit (1) with at least two pairs of terminal contacts (10, 11) for the separate battery (2), at least one pair of terminal contacts (11) being arranged on a projecting, removable tongue (12) and the other pair of terminal contacts (10) being arranged in the vicinity of or directly in or on the constructional unit (1), so that the battery (2), depending on the place where the measuring and display device is installed, can be connected to the tongue (12) or to the constructional unit (1).

2. Device according to Claim 1, characterised in that the tongue (12) is arranged to be able to be broken off from the constructional unit (1).

3. Device according to one of Claims 1 or 2, characterised in that the temperature sensor (5) can be inserted into the wall of the water channel (31) and is connected to the constructional unit (1) by way of a line (51).

4. Device according to one of Claims 1 to 3, characterised in that the constructional unit (1) is arranged laterally on the wall on a water channel (3) led through the housing (3), the tongue (12) being led round the wall of the water channel (31) so that the battery (2) can be arranged on the water channel, and connected to the device, approximately on the opposite side from the measuring and display device.

5. Device according to one of Claims 1 to 3, characterised in that the constructional unit (1), with the tongue (12) removed and with the battery (2), is arranged in a housing (41) provided on a covering rose (4), the temperature sensor (5) being provided outside the housing (41) and being connected to the measuring apparatus (14) by way of a line (51).

6. Device according to Claim 5, characterised in that the housing (41) is arranged to be fastened to the covering rose (4), preferably by snap-in tongues (42).

7. Device according to one of Claims 1 to 6, characterised in that an electrical temperature sensor (5) is provided.

8. Device according to one of Claims 1 to 7, characterised in that the temperature sensor (5) is arranged with one or more bracing springs (52) in a bore (32) in the side wall of the water channel (31).

9. Device according to Claim 8, characterised in that the bore (32) is formed in a threaded metal screw (33), with good heat conduction, which is arranged to be screwed into the wall of the water channel (31).

10. Device according to one of Claims 1 to 9, characterised in that the housing (41) is closed at the rear by a cap (43) which is held in the closed position by locking tongues (44).

## Revendications

1. Dispositif pour mesurer et afficher la température de l'eau dans le cas de robinets sanitaires, comportant dans un boîtier, un dispositif de mesure et d'affichage électrique ainsi qu'une pile constituant une source d'énergie électrique pour l'alimentation du dispositif, un capteur détectant la température de l'eau pour la fournir au dispositif de mesure, caractérisé en ce que le dispositif de mesure et d'affichage comporte au moins deux paires de contacts de raccordement (10, 11) pour la pile séparée (2), au moins une paire de contacts de raccordement (11) étant prévue sur une languette (12), en saillie, susceptible d'être enlevée et l'autre paire de contacts de raccordement (10) se trouve au voisinage ou directement dans ou sur l'ensemble constructif (1), pour que la batterie (2) puisse être reliée à la languette (12) ou a l'ensemble constructif (1) en fonction de l'emplacement d'utilisation du dispositif de mesure et d'affichage.

2. Dispositif selon la revendication 1, caractérisé en ce que la languette (12) peut être cassée et enlevée de l'ensemble constructif (1).

3. Dispositif selon l'une des revendications 1 ou 2, caractérisé en ce que le capteur de température (5) se monte dans la paroi du canal d'eau (31) et est relié à l'ensemble constructif (1) par une conduite (51).

4. Dispositif selon l'une des revendications 1 à 3, caractérisé en ce que l'ensemble constructif (1) est prévu latéralement sur la paroi d'un canal d'eau (31) traversant le boîtier (3), la languette (12) passant autour de la paroi du canal d'eau (31), pour que la pile (2) se trouve sensiblement du côté opposé au dispositif de mesure et d'affichage, sur le canal d'eau (31), et puisse être reliée au dispositif.

5. Dispositif selon l'une des revendications 1 à 3, caractérisé en ce que l'ensemble constructif (1) est muni d'une languette (12), éloignée, et la pile (2) est prévue dans un boîtier (41) prévu sur la rosette (4) formant cache, le capteur de température (5) étant à l'extérieur du boîtier (41) et étant relié au dispositif de mesure (14) par une ligne (51).

6. Dispositif selon la revendication 5, caractérisé en ce que le boîtier (41) se fixe sur la rosette (4) formant cache, de préférence par des languettes enclipsables (42).

7. Dispositif selon l'une des revendications 1 à 6, caractérisé par un capteur électrique (5) de température.

8. Dispositif selon l'une des revendications 1 à 7, caractérisé en ce que le capteur de température (5) est monté avec une ou plusieurs écarteurs élastiques (52) dans un perçage (32) de la paroi latérale du canal d'eau (31).

9. Dispositif selon la revendication 8, caractérisé en ce que le perçage (32) est réalisé dans une vis (33) en métal bon conducteur de chaleur, et qui se visse dans la paroi du canal d'eau (31).

10. Dispositif selon l'une des revendications 1 à 9, caractérisé en ce que le boîtier (41) est fermé au niveau de son dos par un capuchon (43) maintenu en position de fermeture par des languettes d'enclipsage (44).
